# EUROPEAN PATENT SPECIFICATION

(11) **EP 4 362 751 B1**
(45) Date of publication and mention of the grant of the patent: **18.06.2025**
(21) Application number: 22735437.0
(22) Date of filing: 28.06.2022
(51) Int. Cl.: A47J 27/08

(54) **PRESSURE COOKER HAVING MULTIPLE HIGH PRESSURE MODES**
SCHNELLKOCHTOPF MIT MEHREREN HOCHDRUCKMODI
AUTOCUISEUR À MULTIPLES MODES HAUTE PRESSION

(30) Priority: 29.06.2021 BE 202105502
(43) Date of publication of application: 08.05.2024
(73) Proprietor: Berghoff Worldwide NV, 3550 Heusden-Zolder (BE)
(72) Inventor: VANTHOOR, Rafael, 3550 Heusden-Zolder (BE)
(74) Representative: Brantsandpatents bv
(86) International application number: PCT/EP2022/067663
(87) International publication number: WO 2023/275009

(56) References cited:
- WO-A1-2010/060508
- CN-A- 105 380 505
- DE-U1- 8 624 077
- KR-A- 20200 123 628
- US-A1- 2008 290 090

## Description

### FIELD OF INVENTION

The present invention relates to cooking implements. In particular, the present invention relates to a pressure cooker.

### BACKGROUND

Pressure cookers are a popular means with which food is prepared. Said pressure cookers usually include a chamber defining a volume configured to receive food ingredients, at least one pressure regulating element and a lock. Said pressure regulating elements usually further comprise one or more safety elements which permit the cooking of food ingredients inside the chamber of the device under a constant maximum allowable pressure. Said pressure further determining the temperature at which said food ingredients may be cooked.

DE 3200905 discloses a cooking valve for a pressure cooker having a bonnet and an indicator pin, in which an indicator pin is carried, the indicator pin being pressed by the interior of the can and according to the interior The pressure is displaced from the idle position against the force of the indicator spring, the position of the indicator pin acting as a pressure indicator, wherein the indicator pin has at least two position fixes in the portion exposed from the valve body when the pressure builds up. In order to make it easier for the user to recognize when and whether it is necessary to adjust the heat supply or whether the cooking process is properly carried out, it is proposed to provide indicator areas with visible different surface finishes on the outer surface of the indicator pin, these areas directly facing each other Adjoining or separating from each other only by relatively narrow dividing lines or spaces.

DE 86 24 077 U1 discloses a cover with a cooking valve for a pressure cooker comprising a valve body which is pressed against a sealing seat by a valve spring, when a given pressure inside the tank is exceeded, the valve The body rises from the seal seat to expose at least one steam outlet passage. In order to achieve a relatively large flow cross section of at least one steam outlet channel with a simple overall height, it is proposed that the sealing seat should be formed at the edge of the opening in the wall of the cover or by the end of the insertion opening in the opening of the probe (probe-ended, preferably a circular seat seal formed, the valve body extending through the cover opening, and in the closed position, the valve body should be stationary from the outside under the action of the valve spring, wherein the sealing edge abuts against the cover opening or on the edge of the seat seal.

DE 9101769 U1 discloses a cooking valve for a pressure cooker comprising a valve body and an indicator body for indicating pressure, the indicator body being mounted in the valve body in a displaceable manner, each being spring-loaded pressed into their respective idle positions and can be displaced by the pressure inside the tank and against the force of the respective springs according to the pressure inside the tank, in which case the valve body is displaced from its seat by the pressure inside the tank The steam can be discharged from the inside of the can via a suitable hole, and the pressure inside the can is transmitted to the indicator body by a film fixed around the indicator body, wherein the film seals the space accommodating the indicator body with the inside of the can. In order to ensure long-term reliable function at low production costs and at the same time to meet tight manufacturing tolerances, it is recommended that the membrane also surround the valve body in the region of the valve body facing the valve seat.

The diversity of food ingredients and combinations which are prepared by means of food utensils means also a variety of temperature and pressure requirements which must be met if a satisfactory food preparation is to be achieved. Utensils having multiple modes of food preparation are known in the art.

KR20200123628 discloses a pressure cooker having three cooking modes, each mode having different pre-set cooking pressures. A first is pre-set to a predetermined high pressure. A second mode is having a low pressure set to a pressure lower than the high pressure, and a third non-pressure mode set to a pressure lower than the low pressure. Switching between each of the three pressure modes is allowed by an iron ball weight configured to close a first exhaust vent, a pressure weight configured to cover a second exhaust vent, and a solenoid valve. A slidably movable magnet is provided, which magnet is configured to be slidable between a first retracted position and a second extended position. In this second position, the magnetic field of the magnet can attract the iron ball weight, unseating said weight from the opening of the first exhaust vent, allowing fluid communication between the atmosphere and the inside of the pressure cooker, thus permitting no pressure cooking. Closing the solenoid valve in fluid communication with the first vent, allows for high pressure cooking as the pressure weight resting upon the second exhaust vent requires greater pressure before unseating from said vent. In the low pressure mode, the iron ball weight is no longer under effect of the magnet by virtue of said magnet being in a retracted position and away from the iron ball weight. In this configuration, the solenoid valve is open and the iron ball weight is allowed to seat upon the opening of the first exhaust, the mass of said ball wight offering less resistance to the passage of vapor than the pressure weight. This device has the disadvantage of offering little visual confirmation as to the state of the cooking device and the selected cooking mode. The complex construction of the lid of the device and the elements included in said construction add considerable weight the lid, disadvantageously requiring more physical effort to operate the cooking device.

FR2585229 presents a pressure cooker permitting different cooking pressures by making available multiple valve assemblies, which valve assembles are also hermetically sealed in order to allow easier cleaning. Each valve assembly further comprises a manometric rod in order to allow the user to assess the internal pressure of the cooker.

The possibility of having multiple options of cooking pressures is very advantageous. However, the need to replace valve assemblies of the pressure cooker in order to change said cooking pressures presents a number of disadvantages. The most important of these disadvantages is the possibility of user error during the change of said valve assemblies, which may compromise the function of the device, and more importantly, the safety of said device. The need to switch between multiple valve assemblies also increases the complexity of the pressure cooker.

WO2010060508 presents a valve assembly for a pressure cooker, said valve assembly comprising means of to indicate pressure by means of a centrally located piston and rod assembly, said rod being provided with pressure indicating marks. During operation, a spring acts upon said piston keeping it down into the body of the valve assembly. Increased pressure during cooking acts upon a membrane connected to the piston, raising the rod connected to said piston, and thereby evidencing the pressure inside the pressured cooker. Said pressure cooker is further provided with the means to select the cooking pressure by regulating the amount of spring pressure acting upon a safety valve. A higher pressure mode wherein said spring is precompressed, thereby permitting a higher pressure cooking. A no spring pressure mode allows for cooking with no increase in pressure inside the pressure cooker and also to de-pressurize said pressure cooker after pressurized cooking. While the no pressure mode fulfils two functions, it also precludes the selection between more than one higher pressure mode.

US20080290090A1 discloses a pressure cooker with a handle with an operating element, wherein the operating element comprises a rotating shaft. Said pressure cooker is equipped with an operating element with which pressure from the pressure cooker can be relieved through an aperture, wherein means are provided with which the pressure can be relieved with at least two specified different pressure relief rates or with at least one specified pressure relief rate and with a pressure relief rate which can be set to greater values than the specified value. Also, the pressure cooker has an operating element for opening and closing an aperture of the pressure cooker, wherein a second operable aperture of the pressure cooker is provided, as well as a pressure cooker with a pressure acquisition device having a mechanical part with at least one part, movable by the pressure, and an electronic part, which can acquire the position of the movable part in order to determine the pressure.

CN 105380505 relates a pressure adjusting device for a pressure limiting valve and an electric heating cooking utensil. The pressure adjusting device for the pressure limiting valve comprises a first magnet, a pressure adjusting plate, a screw rod, a stepping motor and an electric control board. The first magnet is installed on the pressure limiting valve. The pressure adjusting plate is sleeve joint with a steam discharge pipe. A second magnet attracting the first magnet is arranged on the pressure adjusting plate. The stepping motor can drive a straight line of the screw rod to stretch out or linearly contract. The linear movement of the screw rod can drive the pressure adjusting plate to axially move along the steam discharge pipe in order to adjust the distance between the first magnet and the second magnet and further change pressure limiting level of the pressure limiting valve. The electric control board is connected with the stepping motor and used for controlling work of the stepping motor. The pressure adjusting device for the pressure limiting valve is capable of changing pressure limiting level of the pressure limiting valve to an opening of the steam discharge pipe such that pressure limiting value of the pressure limiting valve can be automatically adjusted.

Devices such as those disclosed in US '090 and CN '505 which rely on electronics and electro-mechanic interfaces for their operation require the inclusion of heat protected channels and compartments in order to protect the said electronics. This results in more complex constructions and added costs while making the devices more difficult to maintain.

The present invention aims to resolve at least some of the problems and disadvantages mentioned above.

### SUMMARY OF THE INVENTION

The present invention and embodiments thereof serve to provide a solution to one or more of the above-mentioned disadvantages. To this end, the present invention relates to a pressure cooker having multiple high pressure modes according to claim 1.

It is an object of the present invention to provide a pressure cooker having different modes of cooking, which modes differ in the maximum pressure allowed inside said pressure cooker.

It is yet another object of the present invention to make available a pressure cooker having different cooking modes, which modes can be changed easily and without the need to remove or add parts to the pressure cooker.

It is yet another object of the present invention to make available a pressure cooker which stay safely closed during and after cooking, which pressure cooker can only be opened when the pressure in its interior is equal to the pressure outside said pressure cooker.

According to an aspect of the invention, a pressure cooker having multiple cooking modes is made available, which pressure cooker includes a lid and a receptacle, which lid includes a valve unit and a lock unit. Said valve unit is provided with pressure selector which permits, very advantageously, easy switching between said cooking modes. Said lock unit further permits the safe use and operation of the pressure cooker by including a pressure actuated safety valve.

### FIGURES

Figure 1 illustrates a section view of a pressure cooker according to an embodiment of the current invention.
Figure 2 illustrates a section view of a valve unit according to an embodiment of the current invention.
Figure 3 illustrates the internal elements of a valve unit according to an embodiment of the current invention when set to high pressure.
Figure 4 illustrates the internal elements of a valve unit according to an embodiment of the current invention when set to low pressure.
Figure 5 illustrates a lock unit according to an embodiment of the current invention without its protective cover.
Figure 6 illustrates a detailed view of lock elements according to an embodiment of the current invention as seen from below.
Figure 7 illustrates a detailed view of lock unit before the lid is locked according to an embodiment of the current invention.
Figure 8 illustrates the position of the button lock when the pressure cooker is closed according to an embodiment of the current invention.

### DETAILED DESCRIPTION

The present invention relates to a pressure cooker having multiple high pressure modes, which pressure modes permit, advantageously, two different higher cooking temperatures.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

In a first aspect, the invention relates to a pressure cooker comprising a receptacle and a lid which can be placed on said receptacle in such a way as to make it pressure-tight, said lid comprising:
a central valve unit comprising a spring loaded piston and rod pressure indicator vertically displaceable along the axis of said valve unit,
a pressure valve vertically displaceable by means of a pivoting lever, which lever is actuated by a vertically displaceable button; and
a low-pressure/safety valve equipped with a first axially mounted low pressure spring and a second axially mounted high pressure spring, said high pressure spring acting upon said low-pressure/safety valve by means of a collar;
a lock unit extending from the center of the lid and towards and beyond the perimeter of said lid.

In a preferred embodiment, a selector lever is provided between the collar and the low-pressure/safety valve, which selector lever is configured to move relative to the low-pressure/safety valve and which selector lever includes a slot surrounding the low-pressure/safety valve, and which slot has a first end and a second end.

The pressure cooker, and in particular the valve unit offer, compared to prior art, multiple advantageous cooking modes. In particular, said valve unit permits a plurality of pressure limits, which pressure limits permit, advantageously, raising the cooking temperature inside the pressure cooker. The plurality of temperatures allowed by the pressure cooker permit, advantageously, faster cooking of food types having different temperature tolerances and without losing desirable nutritional properties of said food.

According to an embodiment of the present invention, the first end of the slot of selector lever and the second end of the same slot are located in different horizontal planes, which planes are located at different heights, and which first end and second end are connected by an inclined surface. This permits alternating moving and holding the collar at different heights by moving selector lever relative to the low-pressure/safety valve. In a first instance, the collar is aligned with the lowest end of the slot of the selector lever, the collar is resting against the low-pressure/safety valve, and in this way, letting the high pressure spring act upon said valve. In a second instance, the collar is aligned with the higher end of the slot of the selector lever, thereby permitting the collar to rest against said higher end. In this second instance, the contact between the collar and the low-pressure/safety valve is broken, leaving said valve under the influence of only the low pressure spring, thereby lowering the pressure necessary to open the low-pressure/safety valve. The difference in the spring tension acting upon the low-pressure/safety valve in both instances require two different pressures in order to open the valve. Said two pressures advantageously defines two cooking modes.

According to a further or another embodiment of the invention, the lock unit comprises:
a locking tab longitudinally displaceable along the length of said lock unit,
a horizontally oriented button, said button being displaceable perpendicularly to the length of the lock unit and configured to move the locking tab by means of a rack and pinion arrangement,
a safety lock pin, said safety lock pin comprising two concentric cylindrical sections, said cylindrical sections being configured to interact with a slot at the distal end of the locking tab.

The lock unit included in the pressure cooking device permits a safe locking and unlocking of the said cooking device. In particular the opening o of the pressure cooker is made, advantageously, much safer by the lock unit. More particularly, the lock unit prevents the opening of the pressure cooker until pressure inside said pressure cooker have dropped to safe levels. This is achieved by means of the safety lock pin, which pin is pushed outwards by the pressure inside the cooking device. In this raised position, the safety lock pin blocks the motion of the locking tab towards said safety lock pin, thereby preventing the opening of the pressure cooker. When pressure inside the pressure cooker decreases, the safety lock pin is allowed to retract towards the interior of the pressure cooker. At this lower position, the safety lock pin no longer obstructs the path of the locking tab, thus allowing the opening of the device. In a further embodiment of the invention, the safety lock pin includes a top cylindrical section and a second cylindrical section, which second section is of larger diameter than the top cylindrical section. According to a still further embodiment of the invention, the slot at or near the end of the locking tab is comprised of two sections, a first section configured to fit both sections of the safety lock pin and a second section of said locking tab being configured to fit only the smaller diameter section of the safety lock pin. The wider section of slot permits the locking tab to remain directed towards the axis of the safety lock pin. In this way, the possibility of malfunction of the lock unit is eliminated.

According to a further or another embodiment of the invention, the pressure indicator includes multiple horizontal colored rings near the top end. These pressure indicating rings permit the visualization of the pressure level inside the pressure cooker. The use of different colors for each ring permit, advantageously, an even faster assessment of the pressure levels.

According to a further or another embodiment of the invention, the valve unit is provided with a spring loaded detent, said detent having a hemispherical end configured to fit two corresponding hemispherical cavities on the upper surface of the selector lever. In this way, the position of the selector lever is limited to two positions, in which position the collar is aligned with one of the two ends of the slot of selector lever. The limiting of the positions of the selector lever by means of detent prevented the positioning of said selector lever in an intermediate position, thereby precluding the correct function and safety of the pressure cooker. Furthermore, detent permits, advantageously, a better retention of the selector lever either one of the desired positions. The detent also provides an advantageous tactile feeling to the user, which tactile feeling confirms the change between pressure modes and the correct engagement of the selector lever in any of the two possible positions.

According to a further or another embodiment of the invention, the receptacle is provided with an radially directed handle extending from the perimeter of said receptacle, said handle having an "L"-shaped recess on its top surface. According to a further embodiment of the invention, the locking tab is provided with a vertical extension suitable to engage an "L"-shaped recess on the upper surface of the receptacle handle. According to yet another further embodiment of the invention, the locking tab extension includes a horizontal spring loaded button lock extending perpendicularly to the length of the locking tab. In this way, the button lock retains the locking tab in a position which permits the locking tab extension to enter the "L"-shaped locking recess on the upper surface of the receptacle handle. Once the receptacle handle and the lock unit are aligned, the button lock retracts under the action of a vertical extension of receptacle handle, unlocking the locking tab. In this way, the locking tab is then free to travel under spring pressure and further into the "L"-shaped recess, thereby rendering the pressure cooker fully locked.

According to a further or another embodiment of the invention, the pinion comprises a first gear and a second gear, said first gear being larger than the second gear and said first gear being mechanically connected to the locking tab, and said second gear being mechanically connected to the button. In this way, a small displacement of button is translated into a larger displacement of the locking tab. This permits, advantageously, to have a longer locking engagement between the locking tab and the recess in receptacle handle.

### DESCRIPTION OF THE FIGURES

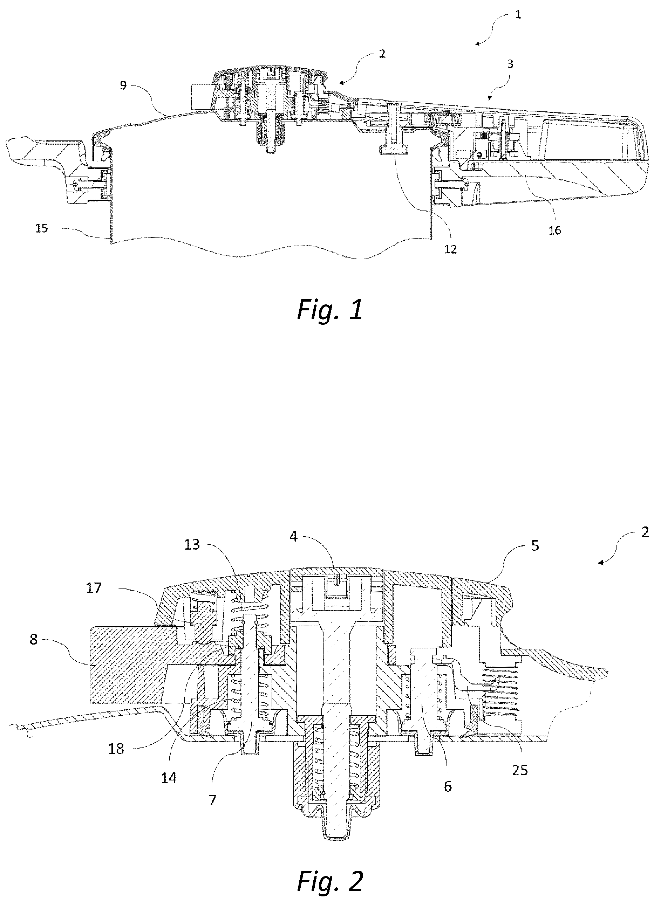

Figure 1 illustrates a section view of the pressure cooker **1.** Said a pressure cooker **1** comprising a receptacle **15** and a lid **9** which can be placed on said receptacle **15** in such a way as to make it pressure-tight. A receptacle handle **16** is here represented rigidly attached to the receptacle **15.** A valve unit **2** and an adjacent lock unit **3** are a represented rigidly mounted to the lid **9.** A safety lock pin **12** provides a connection between the interior of the pressure cooker **1** and the remaining elements of lock unit **3.**
Figure 2 illustrates a section view of the valve unit **2.** A pressure indicator **4** is provided in a central position of the valve unit. A depressurization button **5** is here provided, which button **5** is configured to descend and act upon the right arm of lever **25,** raising the left arm of said lever **25** and thereby also raising pressure valve **6.** The selector lever **8** is here rotatably mounted around the pressure indicator **4.** The selector lever **8** is here shown in a "high pressure setting" position as evidenced by the lower position of the collar **18** relative to the low-pressure/safety valve **7.** Said "high pressure setting" position of the selector lever is maintained by means of detent **17.** This position of the collar **18** allows the high pressure spring **13** to act upon the low-pressure/safety valve **7.** A low pressure spring **14** is shown in contact with a lower section of the low-pressure/safety valve **7.**

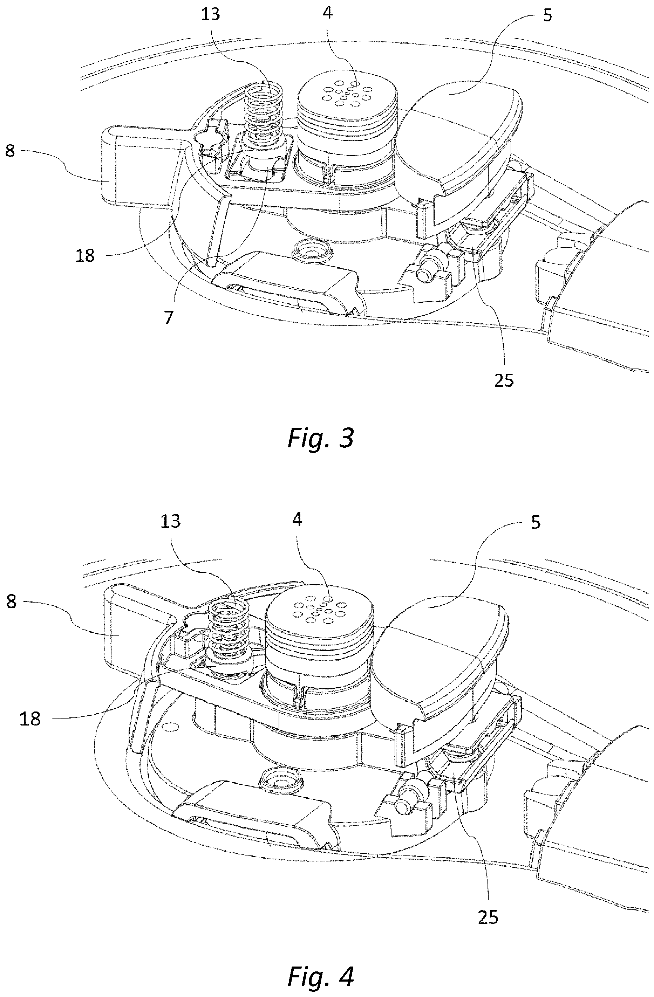

Figure 3 illustrates the internal elements of the valve unit **2** when set to high pressure. Here, the selector lever **8** is positioned such that the collar **18** is aligned with the end of the slot of the selector lever **8,** which end is located in a lower horizontal plane than the opposite end of said slot. In this way, the collar **18** is allowed to rest against a horizontal abutment on the low-pressure/safety valve **7,** which is not illustrated here. In this way, pressure from high pressure spring **13** is allowed to act upon said low-pressure/safety valve **7,** thereby increasing the pressure necessary to open said valve.
Figure 4 illustrates the internal elements of the valve unit when set to low pressure. Here, the selector lever **8** is positioned such that the collar **18** is aligned with the end of the slot of the selector lever **8,** which end comprises a surface in a higher horizontal plane. In this way, the collar **18** is lifted away from the low-pressure/safety valve **7,** which is not illustrated here. By lifting the collar **18,** pressure from high pressure spring **13** no longer acts upon said low-pressure/safety valve **7,** thereby reducing the pressure necessary to open said valve.

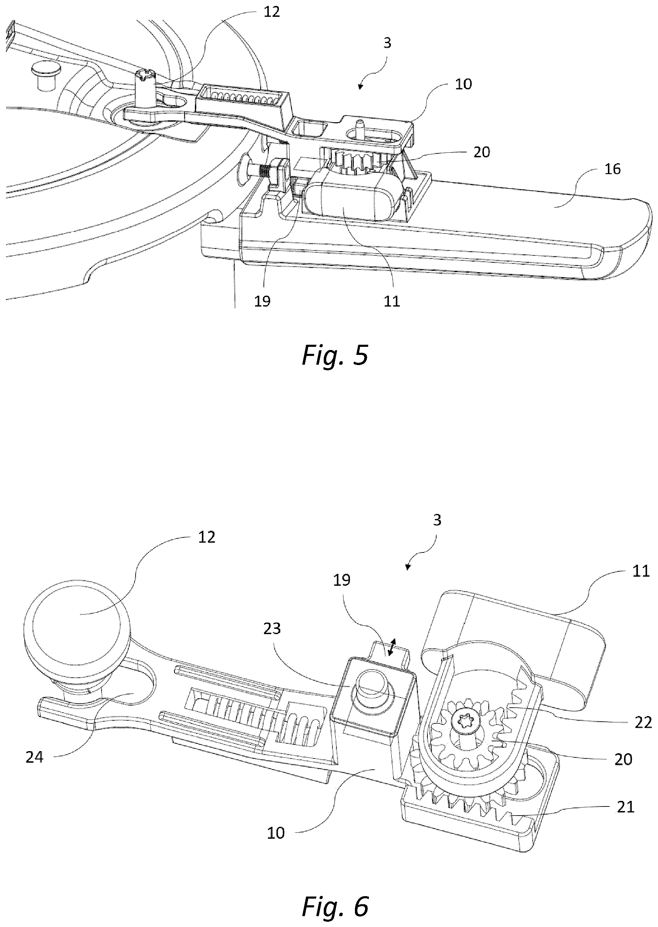

Figure 5 illustrates the lock unit **3** without its protective cover. Said lock unit is here illustrated in a locked state as evidenced by the retracted state of the locking tab **10** relative to the safety lock pin **12.** Button **11** is shown here in an extended position relative to the pinion **20.** Button **11** is shown in a retracted position relative to the locking tab **10,** said button **11** having been previously depressed by the vertical extension of the receptacle handle **26.**
Figure 6 illustrates a detailed view of the lock elements as seen from below. Here the elements of the lock unit **3** are shown in a locked position. Locking tab **10** is shown with the wider section of slot **24** aligned with the axis of the safety lock pin **12.** A vertical locking tab extension **23** is shown here, which vertical extension is configured to interact with the receptacle handle to lock and prevent the whole lid 9 from rotating relative to the receptacle **15.** Figure 6 permits a better visualization of the pinion **20,** which pinion **20** is configured to act as a mechanical link between the locking tab **10** and button **11.**

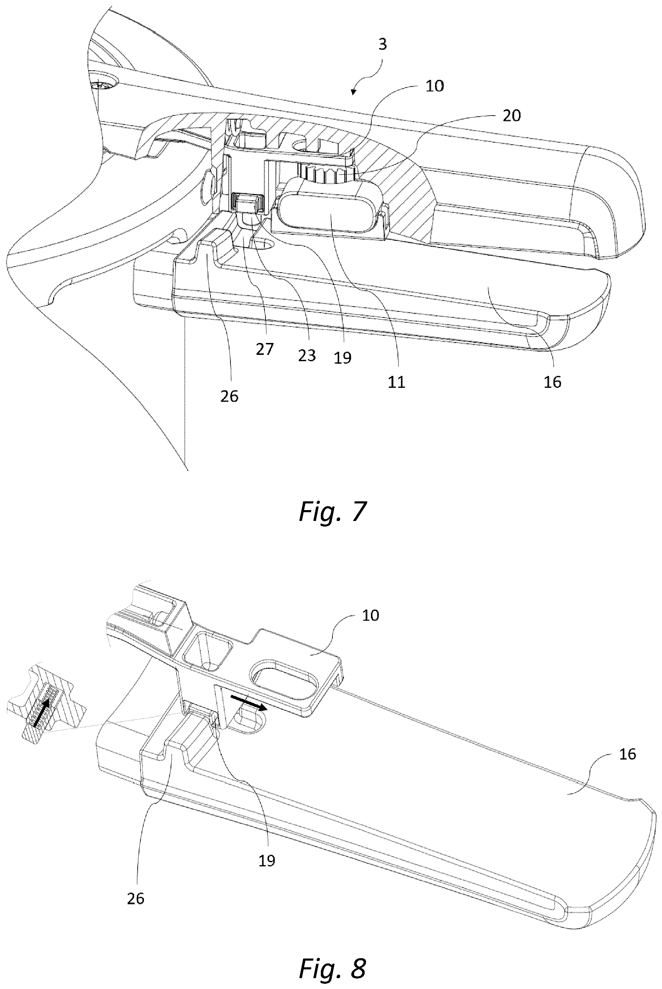

Figure 7 illustrates a detailed view of lock unit **3** before the **9** lid is locked. Here the receptacle handle **16** is shown out of alignment with the lock unit **3.** The locking tab **10** is shown retained in its forwardmost position by the button lock **19.** In this forwardmost position of the locking tab **10,** button **11** is retracted and the vertical extension **23** is aligned with the opening of the "L"-shaped recess **27.**
Figure 8 illustrates the position of the button lock **19** when the pressure cooker is closed. With the lock unit **3** aligned with the receptacle handle **16,** the button lock **19** is compressed against the vertical extension of the receptacle handle, thereby unlocking the locking tab **10.** In this way, the locking tab is allowed to travel under spring pressure and away from the lid **9** and further into the "L"-shaped recess **27.** In this way, the pressure cooker **1** is locked and the safety lock pin **12** is free to travel upwards.

### List of numbered items

- 1: pressure cooker
- 2: valve unit
- 3: lock unit
- 4: pressure indicator
- 5: button
- 6: pressure valve
- 7: low-pressure/safety valve
- 8: selector lever
- 9: lid
- 10: locking tab
- 11: button
- 12: safety lock pin
- 13: high pressure spring
- 14: low pressure spring
- 15: receptacle
- 16: receptacle handle
- 17: detent
- 18: collar
- 19: button lock
- 20: pinion
- 21: locking tab toother rack
- 22: button toothed rack
- 23: locking tab extension
- 24: locking tab slot
- 25: lever
- 26: vertical extension of receptacle handle
- 26: "L"-shaped recess

## Claims

1. A pressure cooker comprising a receptacle and a lid which can be placed on said receptacle in such a way as to make it pressure-tight, said lid comprising:
- a central valve unit (2) comprising a spring loaded piston and rod pressure indicator (4) vertically displaceable along the axis of said valve unit (2),
- a pressure valve (6) vertically displaceable by means of a pivoting lever (25), which lever (25) is actuated by a vertically displaceable button (5); and
- a low-pressure/safety valve (7) equipped with a first axially mounted low pressure spring (14) and a second axially mounted high pressure spring (13), said high pressure spring (13) acting upon said low-pressure/safety valve (7) by means of a collar (18)
- a lock unit (3) extending from the center of the lid and towards and beyond the perimeter of said lid (9),
- **characterized in that,** a selector lever (8) is provided between the collar (18) and the low-pressure/safety valve (7), which selector lever (8) is configured to move relative to the low-pressure/safety valve (7) and which selector lever (8) includes a slot surrounding the low-pressure/safety valve (7), and which slot has a first end and a second end.

2. The pressure cooker according to claim 1, **characterized in that**, the first end of the slot of selector lever (8) and the second end of the same slot are located in different horizontal planes, which planes are located at different heights, and which first end and second end are connected by an inclined surface.

3. The pressure cooker according to claim 1 and claim 2, **characterized in that**, the lock unit (3) comprising:
- a locking tab (10) longitudinally displaceable along the length of said lock unit (3),
- a horizontally oriented button (11), said button being displaceable perpendicularly to the length of the lock unit 3 and configured to move the locking tab (10) by means of a rack and pinion arrangement,
- a safety lock pin (12), said safety lock pin (12) comprising two concentric cylindrical sections, said cylindrical sections being configured to interact with a slot (24) at the distal end of the locking tab (10).

4. A pressure cooker according to claim 1 to claim 3, **characterized in that**, the pressure indicator (4) includes multiple horizontal colored rings near the top end.

5. A pressure cooker according to claim 1 to claim 4, **characterized in that**, the valve unit is provided with a spring loaded detent (17), said detent (17) having a hemispherical end configured to fit two corresponding hemispherical cavities on the upper surface of the selector lever (8).

6. A pressure cooker according to claim 1 to claim 5, **characterized in that**, the receptacle (15) is provided with an radially directed handle (16) extending from the perimeter of said receptacle, said handle (16) having an "L"-shaped recess (27) on its top surface.

7. A pressure cooker according to claim 1 to claim 6, **characterized in that**, the locking tab (10) is provided with a vertical extension (23) suitable to engage an "L"-shaped recess (27) on the upper surface of the receptacle handle (16).

8. A pressure cooker according to claim 1 to claim 7, **characterized in that**, the locking tab extension (23) includes a horizontal spring loaded button lock (19) extending perpendicularly to the length of the locking tab (10).

9. A pressure cooker according to claim 1 to claim 8, **characterized in that**, the safety lock pin (12) includes a top cylindrical section and a second cylindrical section, which second section is of larger diameter than the top cylindrical section.

10. A pressure cooker according to claim 1 to claim 7, **characterized in that**, the slot (24) at or near the end of the locking tab (10) is comprised of two sections, a first section configured to fit both sections of the safety lock pin (12) and a second section of said locking tab (10) being configured to fit only the smaller diameter section of the safety lock pin (12).

11. A pressure cooker according to claim 3, **characterized in that**, the pinion comprises a first gear and a second gear, said first gear being larger than the second gear and said first gear being mechanically connected to the locking tab (10), and said second gear being mechanically connected to the button (11).

## Patentansprüche

1. Schnellkochtopf, ein Gefäß und einen Deckel umfassend, der derart auf dem Gefäß platziert werden kann, dass er dieses druckdicht macht, wobei der Deckel Folgendes umfasst:
- eine mittige Ventileinheit (2), die einen federbelasteten Kolben-und-Stange-Druckindikator (4) umfasst, der entlang der Achse der Ventileinheit (2) axial verlagerungsfähig ist,
- ein Druckventil (6), das mittels eines Schwenkhebels (25) vertikal verlagerungsfähig ist, wobei der Hebel (25) durch einen vertikal verlagerungsfähigen Knopf (5) bedient wird, und
- ein Niederdruck-/Sicherheitsventil (7), das mit einer ersten axial montierten Niederdruckfeder (14) und einer zweiten axial montierten Hochdruckfeder (13) versehen ist, wobei die Hochdruckfeder (13) mittels eines Kragens (18) auf das Niederdruck-/Sicherheitsventil (7) wirkt,
- eine Verriegelungseinheit (3), die sich von der Mitte des Deckels aus und hin zum Umfang des Deckels (9) und über diesen hinaus erstreckt,
- **dadurch gekennzeichnet, dass** zwischen dem Kragen (18) und dem Niederdruck-/Sicherheitsventil (7) ein Auswahlhebel (8) bereitgestellt ist, wobei der Auswahlhebel (8) dafür gestaltet ist, sich relativ zu dem Niederdruck-/Sicherheitsventil (7) zu bewegen, und wobei der Auswahlhebel (8) einen Schlitz beinhaltet, der das Niederdruck-/Sicherheitsventil (7) umgibt, und wobei der Schlitz ein erstes Ende und ein zweites Ende aufweist.

2. Schnellkochtopf nach Anspruch 1, **dadurch gekennzeichnet, dass** das erste Ende des Schlitzes des Auswahlhebels (8) und das zweite Ende selbigen Schlitzes in verschiedenen horizontalen Ebenen angeordnet sind, wobei die Ebenen auf verschiedenen Höhen angeordnet sind, und wobei das erste Ende und das zweite Ende durch eine geneigte Fläche verbunden sind.

3. Schnellkochtopf nach Anspruch 1 und Anspruch 2, **dadurch gekennzeichnet, dass** die Verriegelungseinheit (3) Folgendes umfasst:
- eine Verriegelungsnase (10), die in Längsrichtung entlang der Länge der Verriegelungseinheit (3) verlagerungsfähig ist,
- einen horizontal ausgerichteten Knopf (11), wobei der Knopf senkrecht zu der Länge der Verriegelungseinheit (3) verlagerungsfähig und dafür gestaltet ist, die Verriegelungsnase (10) mittels einer Zahnstangen-Ritzel-Anordnung zu bewegen,
- einen Sicherheitsverriegelungsstift (12), wobei der Sicherheitsverriegelungsstift (12) zwei konzentrische zylindrische Abschnitte umfasst, wobei die zylindrischen Abschnitte dafür gestaltet sind, mit einem Schlitz (24) an dem fernen Ende der Verriegelungsnase (10) zu interagieren.

4. Schnellkochtopf nach Anspruch 1 bis Anspruch 3, **dadurch gekennzeichnet, dass** der Druckindikator (4) mehrere horizontale farbige Ringe nahe dem oberen Ende beinhaltet.

5. Schnellkochtopf nach Anspruch 1 bis Anspruch 4, **dadurch gekennzeichnet, dass** die Ventileinheit mit einer federbelasteten Sperre (17) versehen ist, wobei die Sperre (17) ein halbkugelförmiges Ende aufweist, das dafür gestaltet ist, zu zwei entsprechenden halbkugelförmigen Hohlräumen in der Oberseite des Auswahlhebels (8) zu passen.

6. Schnellkochtopf nach Anspruch 1 bis Anspruch 5, **dadurch gekennzeichnet, dass** das Gefäß (15) mit einem radial ausgerichteten Griff (16) versehen ist, der sich von dem Umfang des Gefäßes aus erstreckt, wobei der Griff (16) in seiner Oberseite eine L-förmige Vertiefung (27) aufweist.

7. Schnellkochtopf nach Anspruch 1 bis Anspruch 6, **dadurch gekennzeichnet, dass** die Verriegelungsnase (10) mit einer vertikalen Verlängerung (23) versehen ist, die dafür geeignet ist, mit einer L-förmigen Vertiefung (27) in der Oberseite des Gefäßgriffs (16) in Eingriff zu stehen.

8. Schnellkochtopf nach Anspruch 1 bis Anspruch 7, **dadurch gekennzeichnet, dass** die Verriegelungsnasenverlängerung (23) einen horizontalen, federbelasteten Sperrknopf (19) beinhaltet, der sich senkrecht zu der Länge der Verriegelungsnase (10) erstreckt.

9. Schnellkochtopf nach Anspruch 1 bis Anspruch 8, **dadurch gekennzeichnet, dass** der Sicherheitssperrstift (12) einen oberen zylindrischen Abschnitt und einen zweiten zylindrischen Abschnitt umfasst, wobei der zweite Abschnitt einen größeren Durchmesser aufweist als der obere zylindrische Abschnitt.

10. Schnellkochtopf nach Anspruch 1 bis Anspruch 7, **dadurch gekennzeichnet, dass** der Schlitz (24) an oder nahe dem Ende der Verriegelungsnase (10) aus zwei Abschnitten besteht, wobei ein erster Abschnitt dafür konfiguriert ist, zu beiden Abschnitten des Sicherheitsverriegelungsstifts (12) zu passen, und ein zweiter Abschnitt der Verriegelungsnase (10) dafür gestaltet ist, nur zu dem Abschnitt des Sicherheitssperrstifts (12) mit dem kleineren Durchmesser zu passen.

11. Schnellkochtopf nach Anspruch 3, **dadurch gekennzeichnet, dass** das Ritzel ein erstes Zahnrad und ein zweites Zahnrad umfasst, wobei das erste Zahnrad größer als das zweite Zahnrad ist und das erste Zahnrad mechanisch mit der Verriegelungsnase (10) verbunden ist und das zweite Zahnrad mechanisch mit dem Knopf (11) verbunden ist.

## Revendications

1. Autocuiseur comprenant un récipient et un couvercle qui peut être placé sur ledit récipient de manière à le rendre étanche à la pression, ledit couvercle comprenant :
- une unité de soupape centrale (2) comprenant un piston à ressort et un indicateur de pression à tige (4) déplaçable verticalement le long de l'axe de ladite unité de soupape (2),
- une soupape de pression (6) déplaçable verticalement au moyen d'un levier pivotant (25), lequel levier (25) est actionné par un bouton (5) déplaçable verticalement ; et
- une soupape basse pression/de sécurité (7) équipée d'un premier ressort basse pression monté axialement (14) et d'un second ressort haute pression monté axialement (13), ledit ressort haute pression (13) agissant sur ladite soupape basse pression/de sécurité (7) au moyen d'un collier (18)
- une unité de verrouillage (3) s'étendant du centre du couvercle vers et au-delà du périmètre dudit couvercle (9),
- **caractérisé en ce que,** un levier de sélection (8) est prévu entre le collier (18) et la soupape de basse pression/de sécurité (7), lequel levier de sélection (8) est conçu pour se déplacer par rapport à la soupape de basse pression/de sécurité (7) et lequel levier de sélection (8) comporte une fente entourant la soupape de basse pression/de sécurité (7), et laquelle fente possède une première extrémité et une seconde extrémité.

2. Autocuiseur selon la revendication 1, **caractérisé en ce que**, la première extrémité de la fente du levier de sélection (8) et la seconde extrémité de la même fente sont situées dans des plans horizontaux différents, lesquels plans sont situés à des hauteurs différentes, et lesquelles première extrémité et seconde extrémité sont reliées par une surface inclinée.

3. Autocuiseur selon la revendication 1 et la revendication 2, **caractérisé en ce que**, l'unité de verrouillage (3) comprenant :
- une languette de verrouillage (10) pouvant être déplacée longitudinalement sur la longueur de l'unité de verrouillage (3),
- un bouton orienté horizontalement (11), ledit bouton pouvant être déplacé perpendiculairement à la longueur de l'unité de verrouillage **3** et étant conçu pour déplacer la languette de verrouillage (10) au moyen d'un dispositif à crémaillère,
- une goupille de verrouillage de sécurité (12), ladite goupille de verrouillage de sécurité (12) comprenant deux sections cylindriques concentriques, lesdites sections cylindriques étant conçues pour interagir avec une fente (24) au niveau de l'extrémité distale de la languette de verrouillage (10).

4. Autocuiseur selon les revendications 1 à 3, **caractérisé en ce que**, l'indicateur de pression (4) comporte de multiples anneaux colorés horizontaux près de l'extrémité supérieure.

5. Autocuiseur selon les revendications 1 à 4, **caractérisé en ce que**, l'unité de soupape est pourvue d'un cran d'arrêt à ressort (17), ledit cran d'arrêt (17) ayant une extrémité hémisphérique configurée pour s'adapter à deux cavités hémisphériques correspondantes sur la surface supérieure du levier de sélection (8).

6. Autocuiseur selon la revendication 1 à la revendication 5, **caractérisé en ce que**, le récipient (15) est muni d'une poignée (16) orientée radialement s'étendant à partir du périmètre dudit récipient, ladite poignée (16) possédant un renfoncement en forme de « L » (27) sur sa surface supérieure.

7. Autocuiseur selon la revendication 1 à la revendication 6, **caractérisé en ce que**, la languette de verrouillage (10) est pourvue d'une extension verticale (23) apte à s'engager dans un renfoncement en forme de « L » (27) sur la surface supérieure de la poignée de récipient (16).

8. Autocuiseur selon les revendications 1 à 7, **caractérisé en ce que**, l'extension de languette de verrouillage (23) comporte un bouton de verrouillage horizontal à ressort (19) s'étendant perpendiculairement à la longueur de la languette de verrouillage (10).

9. Autocuiseur selon les revendications 1 à 8, **caractérisé en ce que**, la goupille de verrouillage de sécurité (12) comporte une section cylindrique supérieure et une seconde section cylindrique, laquelle seconde section ayant un diamètre supérieur à la section cylindrique supérieure.

10. Autocuiseur selon la revendication 1 à la revendication 7, **caractérisé en ce que**, la fente (24) au niveau de l'extrémité ou près de l'extrémité de la languette de verrouillage (10) est composée de deux sections, une première section conçue pour s'adapter aux deux sections de la goupille de verrouillage de sécurité (12) et une seconde section de ladite languette de verrouillage (10) étant conçue pour s'adapter uniquement à la section de plus petit diamètre de la goupille de verrouillage de sécurité (12).

11. Autocuiseur selon la revendication 3, **caractérisé en ce que**, le pignon comprend un premier engrenage et un second engrenage, ledit premier engrenage étant plus grand que le second engrenage et ledit premier engrenage étant relié mécaniquement à la languette de verrouillage (10), et ledit second engrenage étant relié mécaniquement au bouton (11).
